# DEMANDE DE BREVET EUROPEEN

(11) **EP 2 537 704 A1**
(43) Date de publication de la demande: **26.12.2012**
(21) Numéro de dépôt: 12171391.1
(22) Date de dépôt: 08.06.2012
(51) Int. Cl.: B60N 2/06, B60N 2/12, B60N 2/20, B60N 2/30, B60N 2/36

(54) **Siège de véhicule automobile**

(30) Priorité: 22.06.2011 FR 1155516
(71) Demandeur: CENTRE D'ETUDE ET DE RECHERCHE POUR L'AUTOMOBILE (CERA), 51100 Reims (FR)
(72) Inventeur: Airault, Jean-Yves, 56430 Concoret (FR); Brice, Patrick, 54110 Hudiviller (FR); Gevaert, Guillaume, 62179 Wissant (FR)
(74) Mandataire: Sayettat, Julien Christian

(57) **Abrégé**

L'invention concerne un siège (1) de véhicule automobile pourvu d'une assise et d'un dossier (2) actionnable en rotation vers l'avant à partir d'une configuration d'utilisation, ledit siège comprenant un rail fixe (3), un rail mobile (4) et un brancard de dossier (5) monté solidairement audit rail mobile par l'intermédiaire d'une bielle (6), ledit dossier pouvant être actionné vers une configuration escamotée et vers une configuration d'accès aux places arrière, ledit siège comprenant en outre une butée (9) solidaire de ladite bielle et une butée réciproque (10) solidaire dudit rail fixe, ladite butée (9) étant agencée pour adopter une position de butée en position avant extrême de réglage alors que ledit dossier est en configuration d'utilisation ou escamotée et une position écartée lorsque ledit dossier est en configuration d'accès aux places arrière, ladite butée ou ladite butée réciproque étant agencée pour adopter une position d'esquive lorsque ledit rail mobile est ramené vers l'arrière depuis une position située en avant de ladite position extrême alors que ledit dossier est disposé en configuration d'utilisation.

## Description

L'invention concerne un siège de véhicule automobile.

Il est connu de réaliser un siège de véhicule automobile pourvu d'une assise et d'un dossier actionnable en rotation à partir d'une configuration d'utilisation, où ledit dossier est sensiblement vertical, vers une configuration escamotée, où ledit dossier est rabattu sur ladite assise, ledit siège comprenant :
- un rail fixe destiné à être fixé au sol dudit véhicule,
- un rail mobile sur lequel est fixé ladite assise, ledit rail mobile étant monté en coulissement longitudinal sur ledit rail fixe,
- un brancard de dossier monté en rotation solidairement audit rail mobile, de manière à assurer la rotation dudit dossier,
- une butée solidaire dudit rail mobile et une butée réciproque solidaire dudit rail fixe, ladite butée venant en appui sur ladite butée réciproque lorsque ledit rail mobile est avancé jusqu'à une position avant extrême de réglage.

Lorsque le véhicule est dépourvu de porte arrière, on peut prévoir en outre une configuration d'accès aux places arrière, où ledit dossier est incliné partiellement vers l'avant pour faciliter ledit accès.

Pour faciliter davantage un tel accès aux places arrière, il est pertinent de prévoir une avancée du siège au delà de la position avant extrême, en réalisant une sur-course du rail mobile vers l'avant.

Or la présence des butée et butée réciproque ne permet pas une telle sur-course.

L'invention a pour but de pallier cet inconvénient en proposant un agencement qui permette, sur un siège à dossier escamotable, d'assurer à la fois un blocage du rail mobile en position extrême lorsque le siège est utilisé et une sur-course facilitant l'accès aux places arrière.

A cet effet, l'invention propose un siège de véhicule automobile pourvu d'une assise et d'un dossier actionnable en rotation vers l'avant à partir d'une configuration d'utilisation, ledit siège comprenant :
- un rail fixe destiné à être fixé au sol dudit véhicule,
- un rail mobile sur lequel est fixé ladite assise, ledit rail mobile étant monté en coulissement longitudinal sur ledit rail fixe,
- un brancard de dossier monté solidairement audit rail mobile par l'intermédiaire d'une bielle dont les extrémités sont respectivement montées en rotation audit brancard de dossier, selon un premier axe transversal, et solidairement audit rail mobile, selon un deuxième axe transversal,
ledit dossier pouvant être actionné :
- par rotation dudit dossier autour dudit premier axe vers une configuration escamotée, où ledit dossier est rabattu sur ladite assise,
- par rotation de ladite bielle arrière autour dudit deuxième axe vers une configuration d'accès aux places arrière, où ledit dossier est incliné partiellement vers l'avant,
ledit siège comprenant en outre une butée solidaire de ladite bielle et une butée réciproque solidaire dudit rail fixe, ladite butée étant agencée pour adopter :
- une position de butée permettant un appui desdites butées entre elles lorsque ledit rail mobile est avancé jusqu'à une position avant extrême de réglage alors que ledit dossier est en configuration d'utilisation ou escamotée,
- une position écartée permettant d'éviter ledit appui lorsque ledit dossier est en configuration d'accès aux places arrière et lesdites butées sont en regard l'une de l'autre, de manière à permettre un avancement dudit rail mobile au delà de ladite position extrême,
ladite butée ou ladite butée réciproque étant agencée pour adopter une position d'esquive, évitant une coopération entre lesdites butées, lorsque ledit rail mobile est ramené vers l'arrière depuis une position située en avant de ladite position extrême alors que ledit dossier est disposé en configuration d'utilisation.

Dans cette description, les termes de positionnement dans l'espace (longitudinal, transversal, latéral, avant, arrière, vertical, ...) sont pris en référence au siège disposé dans le véhicule avec son dossier relevé en configuration d'utilisation.

Plus particulièrement, c'est la butée réciproque qui est agencée pour pouvoir passer en position d'esquive.

Le fait que la butée soit solidaire de la bielle permet d'actionner ladite butée en rotation simultanément à ladite bielle, lors de la mise du dossier en configuration d'accès aux places arrière, de manière à la positionner de sorte qu'elle soit écartée de la butée réciproque lorsqu'elle se retrouve en regard de cette dernière, permettant ainsi une avancée du siège au delà de la position avant extrême.

Avec l'agencement proposé, on peut :
- d'une part réaliser une sur-course du siège vers l'avant lors de la mise du dossier en configuration d'accès aux places arrière,
- d'autre part permettre au siège en état de sur-course de revenir en arrière de la position avant extrême alors que le dossier a été remis en configuration d'utilisation.

D'autres particularités et avantages de l'invention apparaîtront dans la description qui suit, faite en référence aux figures jointes dans lesquelles :

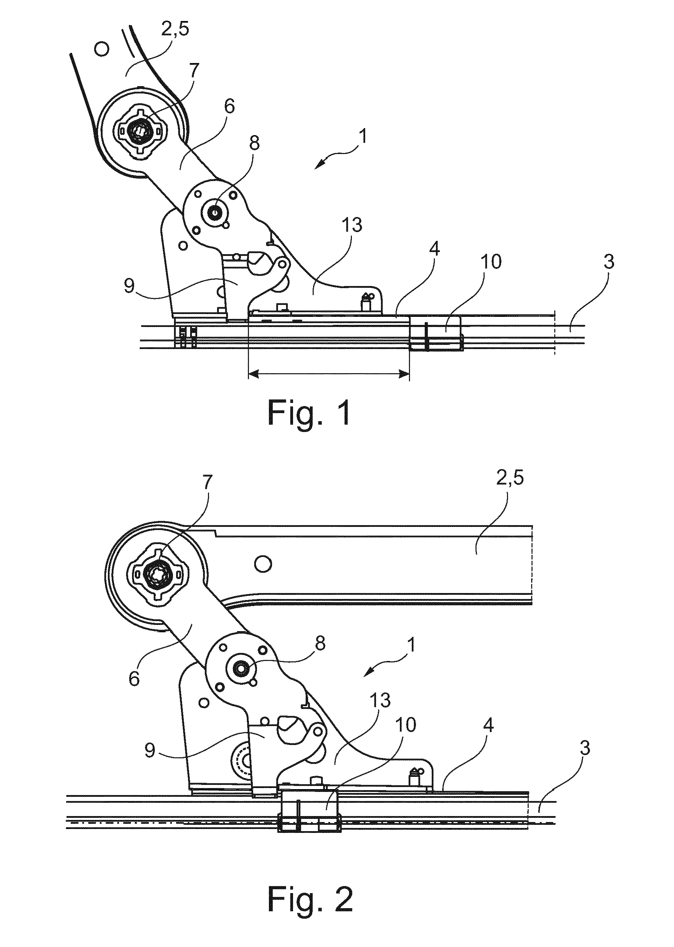

- la figure 1 est une vue latérale partielle d'un siège selon une réalisation, le dossier étant en configuration d'utilisation, la butée étant disposée en arrière de la butée réciproque,
- la figure 2 est analogue à la figure 1, le dossier étant en configuration rabattue et la butée étant en position de butée,

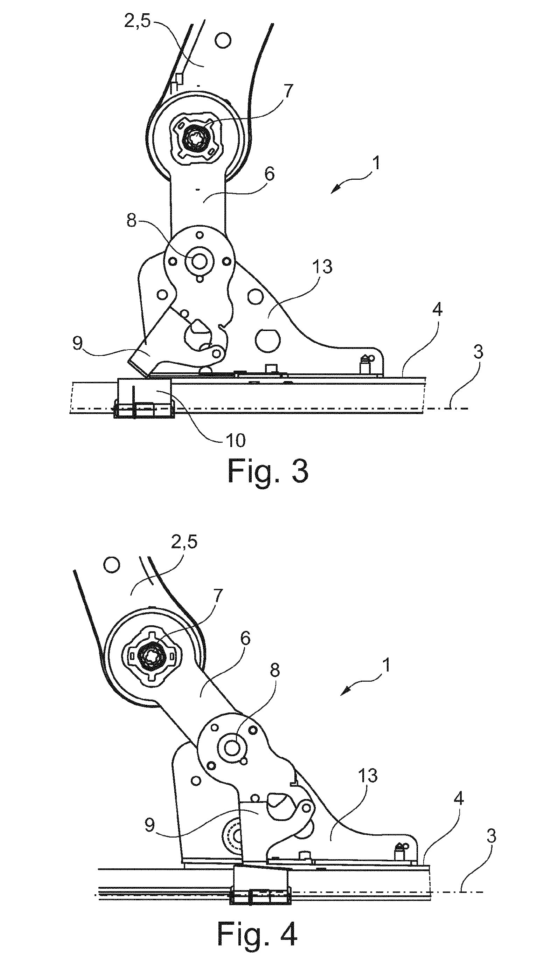

- la figure 3 est analogue à la figure 1, le dossier étant en configuration d'accès aux places arrière et la butée étant en position écartée,
- la figure 4 est analogue à la figure 1, le dossier étant en configuration d'utilisation et la butée réciproque étant en position d'esquive,

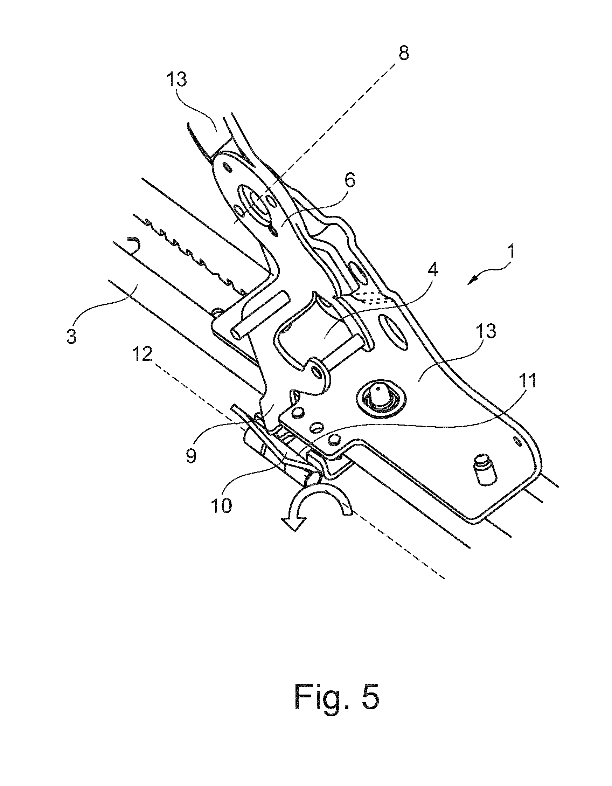

- la figure 5 est une vue de haut en perspective cavalière de la figure 4.

En référence aux figures, on décrit un siège 1 de véhicule automobile pourvu d'une assise, non représentée, et d'un dossier 2 actionnable en rotation vers l'avant à partir d'une configuration d'utilisation - où ledit dossier est sensiblement vertical -, ledit siège comprenant :
- un rail fixe 3 destiné à être fixé au sol dudit véhicule,
- un rail mobile 4 sur lequel est fixé ladite assise, ledit rail mobile étant monté en coulissement longitudinal sur ledit rail fixe,
- un brancard de dossier 5 monté solidairement audit rail mobile par l'intermédiaire d'une bielle 6 dont les extrémités sont respectivement montées en rotation audit brancard de dossier, selon un premier axe 7 transversal, et solidairement audit rail mobile - ici sur une embase 13 fixée audit rail mobile -, selon un deuxième axe 8 transversal,
ledit dossier pouvant être actionné :
- par rotation dudit dossier autour dudit premier axe vers une configuration escamotée, où ledit dossier est rabattu sur ladite assise,
- par rotation de ladite bielle arrière autour dudit deuxième axe vers une configuration d'accès aux places arrière, où ledit dossier est incliné partiellement vers l'avant,
ledit siège comprenant en outre une butée 9 solidaire de ladite bielle et une butée réciproque 10 solidaire dudit rail fixe, ladite butée 9 étant agencée pour adopter :
- une position de butée permettant un appui desdites butées entre elles lorsque ledit rail mobile est avancé jusqu'à une position avant extrême de réglage alors que ledit dossier est en configuration d'utilisation ou escamotée,
- une position écartée permettant d'éviter ledit appui lorsque ledit dossier est en configuration d'accès aux places arrière et lesdites butées sont en regard l'une de l'autre, de manière à permettre un avancement dudit rail mobile au delà de ladite position extrême,
ladite butée ou ladite butée réciproque étant agencée pour adopter une position d'esquive, évitant une coopération entre lesdites butées, lorsque ledit rail mobile est ramené vers l'arrière depuis une position située en avant de ladite position extrême alors que ledit dossier est disposé en configuration d'utilisation.

Dans la réalisation représentée, c'est la butée réciproque 10 qui est agencée pour pouvoir passer en position d'esquive.

Selon la réalisation représentée, la butée réciproque 10 est montée mobile sur le rail fixe 3 de manière à pouvoir passer d'une position initiale à la position d'esquive, ladite butée réciproque étant contrainte vers la position initiale par un moyen ressort, non représenté, ladite butée réciproque présentant une surface de came 11 agencée pour, lors du retour vers l'arrière du rail mobile 4 vers la position extrême alors que le dossier 2 est disposé en configuration d'utilisation:
- entrer en coopération avec la butée 9 formant suiveur de came,
- écarter ladite butée réciproque de ladite butée pour permettre le passage de ladite butée au delà de ladite butée réciproque vers l'arrière.

Selon la réalisation représentée, la butée réciproque 10 est montée mobile en rotation, ici selon un troisième axe 12 longitudinal.

Selon une variante non représentée, la butée réciproque 10 est montée mobile en translation, ladite butée se présentant sous la forme d'un pêne.

De façon non représentée, le siège 1 comprend un moyen de verrouillage du rail mobile 4 par rapport au rail fixe 3 selon une pluralité de positions, ledit moyen étant agencé de manière à se déverrouiller par rabattement du dossier 2, que ce soit en configuration escamotée ou d'accès aux places arrière, ceci de manière à permettre le libre coulissement du rail mobile 4.

## Revendications

1. Siège (1) de véhicule automobile pourvu d'une assise et d'un dossier (2) actionnable en rotation vers l'avant à partir d'une configuration d'utilisation, ledit siège comprenant :
• un rail fixe (3) destiné à être fixé au sol dudit véhicule,
• un rail mobile (4) sur lequel est fixé ladite assise, ledit rail mobile étant monté en coulissement longitudinal sur ledit rail fixe,
• un brancard de dossier (5) monté solidairement audit rail mobile par l'intermédiaire d'une bielle (6) dont les extrémités sont respectivement montées en rotation audit brancard de dossier, selon un premier axe (7) transversal, et solidairement audit rail mobile, selon un deuxième axe (8) transversal,
ledit dossier pouvant être actionné :
• par rotation dudit dossier autour dudit premier axe vers une configuration escamotée, où ledit dossier est rabattu sur ladite assise,
• par rotation de ladite bielle arrière autour dudit deuxième axe vers une configuration d'accès aux places arrière, où ledit dossier est incliné partiellement vers l'avant,
ledit siège comprenant en outre une butée (9) solidaire de ladite bielle et une butée réciproque (10) solidaire dudit rail fixe, ladite butée (9) étant agencée pour adopter :
• une position de butée permettant un appui desdites butées entre elles lorsque ledit rail mobile est avancé jusqu'à une position avant extrême de réglage alors que ledit dossier est en configuration d'utilisation ou escamotée,
• une position écartée permettant d'éviter ledit appui lorsque ledit dossier est en configuration d'accès aux places arrière et lesdites butées sont en regard l'une de l'autre, de manière à permettre un avancement dudit rail mobile au delà de ladite position extrême,
ladite butée ou ladite butée réciproque étant agencée pour adopter une position d'esquive, évitant une coopération entre lesdites butées, lorsque ledit rail mobile est ramené vers l'arrière depuis une position située en avant de ladite position extrême alors que ledit dossier est disposé en configuration d'utilisation.

2. Siège selon la revendication 1, **caractérisé en ce que** la butée réciproque (10) est montée mobile sur le rail fixe (3) de manière à pouvoir passer d'une position initiale à la position d'esquive, ladite butée réciproque étant contrainte vers la position initiale par un moyen ressort, ladite butée réciproque présentant une surface de came (11) agencée pour, lors du retour vers l'arrière du rail mobile (4) vers la position extrême alors que le dossier (2) est disposé en configuration d'utilisation :
• entrer en coopération avec la butée (9) formant suiveur de came,
• écarter ladite butée réciproque de ladite butée pour permettre le passage de ladite butée au delà de ladite butée réciproque vers l'arrière.

3. Siège selon la revendication 2, **caractérisé en ce que** la butée réciproque (10) est montée mobile en rotation.

4. Siège selon la revendication 2, **caractérisé en ce que** la butée réciproque (10) est montée mobile en translation.

5. Siège selon l'une quelconque des revendications 1 à 4, **caractérisé en ce qu'**il comprend un moyen de verrouillage du rail mobile (4) par rapport au rail fixe (3) selon une pluralité de positions, ledit moyen étant agencé de manière à se déverrouiller par rabattement du dossier (2).
